# EUROPEAN PATENT APPLICATION

(11) **EP 4 064 507 A1**
(43) Date of publication of application: **28.09.2022**
(21) Application number: 21164863.9
(22) Date of filing: 25.03.2021
(51) Int. Cl.: H02J 7/00, G04B 99/00, H02J 7/35, G04C 10/00

(54) **SOLAR-POWERED DEVICE EMPLOYING A POWER MANAGEMENT SYSTEM AND METHOD**

(71) Applicant: Richemont International S.A., 1752 Villars-sur-Glâne (CH); e-peas S.A., 1435 Mont-Saint-Guibert (BE)
(72) Inventor: DE VOS, Julien, 1360 Perwez (BE); GOSSET, Geoffroy, 1330 Rixensart (BE); PAREZ, Robin, 5310 Dhuy (BE); BARDYN, Flavien, 2013 Colombier (CH); ZUERCHER, Jonathan, 2036 Cormondrèche (CH)
(74) Representative: e-Patent SA

(57) **Abstract**

A solar-powered device (1) employing a power management system (50) and method is disclosed. The device (1) comprises: an array (10) of one or more solar cells (12) for converting ambient light into a solar source voltage (Vsrc); an energy storage device, such as a secondary battery (20); a load (30) that is powered when the device (1) operates; and a power management system (50) for receiving and monitoring the solar source voltage (Vsrc) to harvest energy therefrom, the power management system (50) generating a load voltage (Vload) to power the load (30) and a storage voltage (Vbat) to charge the energy storage device (20). While the device (1) operates and when the solar source voltage (Vsrc) is above a first threshold voltage (Vth1), the power management system (50) is configured to operate in an active supply (A) mode in which the system (50) continually monitors the solar source voltage (Vsrc), and while the device (1) operates and when the solar source voltage (Vsrc) is below the first threshold voltage (Vth1), the power management system (50) is configured to operate in at least one low-power (LS1, LS2, DS) mode in which the system (50) does not monitor the solar source voltage (Vsrc), only monitors the solar source voltage (Vsrc) when one or more conditions are met, or monitors the solar source voltage (Vsrc) at a reduced rate in comparison to the continual monitoring in the active supply mode.

## Description

The invention relates to a solar-powered device, such as an electronic timepiece with a quartz movement, in which one or more solar cells are used to energize and operate the device and to store energy from the solar cells, where the device further employs a power management system and method to increase its energy efficiency.

A solar-powered device comprises one or more solar cells made of semiconducting materials that exhibit a photovoltaic effect to convert light into electricity. Solar-powered devices may employ a power management system or controller that manages the harvesting of energy from the solar cells and the charging of a secondary battery. The power management system is also responsible for the regulation of a load voltage to power the operative components of the device (i.e., the load) and an internal source voltage to operate the power management controller itself.

In the case of an electronic timepiece, the load typically comprises a quartz movement and, in some cases, also an electronic or LCD display. To conserve energy, under certain conditions, the power management controller can be configured to place at least some part of the overall device into a low-power mode (also referred to as a power-saving or sleep mode). This helps to preserve the secondary battery's energy and prolong its operation, while also helping to ensure correct operation when there is not enough energy available for the device to operate in a fully active mode. The conditions that trigger entry into a low-power mode may vary, for example, on whether the load operates infrequently or in a quasi-continuous manner as in the case of an electronic quartz timepiece movement where a stepper motor must be driven every second.

In one common scenario, a solar-powered device may enter a low-power mode whenever the voltage of its secondary battery falls below a predetermined threshold level. While this approach helps conserve battery power, it does not take into account the conditions surrounding power harvesting, in order to potentially avoid the battery voltage falling below the threshold in the first place.

It is also known to change the operating mode of a solar-powered device's load when the voltage output by a solar cell panel falls below a certain threshold. For example, US20130194897 describes a solar-cell powered electronic timepiece with a rechargeable secondary battery and an LCD display. An illuminance detection circuit periodically performs an illuminance detection operation for determining whether the electromotive voltage of the solar panel is equal to or less than predetermined threshold voltage. The illuminance detection circuit outputs an illuminance signal showing "presence of illuminance" or "absence of illuminance" to a non-illuminance time detection unit and a mode control unit of the CPU. When the duration of a period of non-illuminance exceeds a predetermined transition time (for example, 30 minutes), the mode control unit transitions the electronic timepiece from an active mode to a power saving mode in which the LCD display of the load is turned off.

However, in such prior art solar-powered devices, power management of the harvesting of energy from the solar cells and the charging of the secondary battery remains inefficient when the energy available for harvesting is limited. This may impact a system's power transfer efficiency and reduce the secondary battery's lifespan, particularly for devices such as quartz timepieces that operate quasi-continuously, but with relatively low current.

There is therefore a need for a solar-powered device employing a power management system and method that can more efficiently monitor and harvest energy from solar cells when the energy available for harvesting is limited. Accordingly, it is an objective of the present invention to alleviate the above-mentioned disadvantages by providing a solar-powered device comprising a power management system that can be configured to selectively place the power management system itself into one or more low power modes in response to the voltage detected at the output of a solar cell array of the device, while the load continues to be powered and the device continues to operate. In this manner, the power management system can more optimally monitor and harvest energy from the solar cells, thereby reducing the system's internal power consumption and better preserving the charge of the energy storage such as a secondary battery.

In one aspect, the present invention provides a solar-powered device comprising an array of one or more solar cells for converting ambient light into a solar source voltage, an energy storage device such as a secondary battery, a load that is powered when the device operates, and a power management system for receiving and monitoring the solar source voltage to harvest energy therefrom. The power management system generates a load voltage to power the load and a storage voltage to charge the energy storage device. While the device operates and when the solar source voltage is above a first threshold voltage, the power management system is configured to operate in an active supply mode in which the system continually monitors the solar source voltage. However, while the device operates and when the solar source voltage is below the first threshold voltage, the power management system is configured to operate in at least one low-power mode in which the system does not monitor the solar source voltage, only monitors the solar source voltage when one or more conditions are met, or monitors the solar source voltage at a reduced rate in comparison to the continual monitoring in the active supply mode.

In one embodiment, while the device operates and when the solar source voltage is below the first threshold voltage and above a second threshold voltage that is lower than the first threshold voltage, the power management system is configured to operate in a light sleep low-power mode in which the system only monitors the solar source voltage when one or more conditions are met or monitors the solar source voltage at a reduced rate in comparison to the continual monitoring in the active supply mode. In this embodiment, while the device operates and when the solar source voltage is below the second threshold voltage, the power management system is also configured to operate in a deep sleep low-power mode in which the system does not monitor the solar source voltage.

In another embodiment, while the device operates and when the solar source voltage is below the first threshold voltage and above a third threshold voltage that is between the first threshold voltage and the second threshold voltage, the power management system may also be configured to operate in a first light sleep low-power mode in which the system monitors the solar source voltage at a reduced rate in comparison to the continual monitoring in the active supply mode. Furthermore, while the device operates and when the solar source voltage is below the third threshold voltage and above the second threshold voltage, the power management system may further be configured to operate in a second light sleep low-power mode in which the system only monitors the solar source voltage when one or more conditions are met.

The one or more conditions may be met when a voltage generated by the power management system falls below a predetermined level.

The power management system may also generate an internal supply voltage to power the power management system itself.

The power management system preferably comprises a DC-DC voltage converter regulator having a first input for receiving the solar source voltage, a first output for generating the internal supply voltage, a second output for generating the load voltage, and a third output for generating the storage voltage. The DC-DC voltage converter regulator preferably comprises only a single inductor, and it may also further comprise a second input for receiving the storage voltage.

In a preferred embodiment, the power management system comprises a maximum power point tracking circuit for monitoring the solar source voltage and tracking the maximum power point at which to harvest energy from the solar source voltage. The maximum power point tracking circuit may use a fractional open circuit voltage technique to sample the solar source voltage in which the solar array is momentarily disconnected from the rest of the power management system and the open circuit solar source voltage is measured.

More generally, a measurement of the open circuit solar source voltage may be used to determine the mode of operation of power management system while the device operates.

The power management system preferably comprises a controller for configuring the mode of operation of the power management system, and at least part of the power management system may be implemented as an integrated circuit, preferably as an application specific integrated circuit with a programmable IP logic core.

The device may advantageously be a solar-powered timepiece where the load is an electronic quartz movement comprising a timing circuit and a stepper motor.

In another aspect, the present invention provides a power management method for a solar-powered device comprising an array of one or more solar cells for converting ambient light into a solar source voltage, an energy storage device such as a secondary battery, and a load that is powered when the device operates. The method comprises receiving the solar source voltage, monitoring the solar source voltage to harvest energy therefrom in accordance with a plurality of operating modes, and generating a load voltage to power the load and a storage voltage to charge the energy storage device. The monitoring of the solar source voltage in accordance with a plurality of operating modes includes: while the device operates and when the solar source voltage is above a first threshold voltage, operating in an active supply mode in which the solar source voltage is continually monitored; and while the device operates and when the solar source voltage is below the first threshold voltage, operating in at least one low-power mode in which the solar source voltage is not monitored, the solar source voltage is only monitored when one or more conditions are met, or the solar source voltage is monitored at a reduced rate in comparison to the continual monitoring in the active supply mode.

Other features and advantage of the present invention are described further below, and exemplary embodiments of the present invention will now be described with reference to the drawings, in which:
Figure 1 is a block system diagram illustrating a solar-powered electronic device comprising a power management system in accordance with an embodiment of the invention;
Figure 2 is a high-level block circuit diagram illustrating the power management system for the device in figure 1 in more detail;
Figure 3 is a diagram illustrating various exemplary low-power operating modes of the power management system as a function of the solar array source voltage; and
Figure 4 is a flow control diagram illustrating a power management method in which the solar-powered device operates in and transitions between different operating modes.

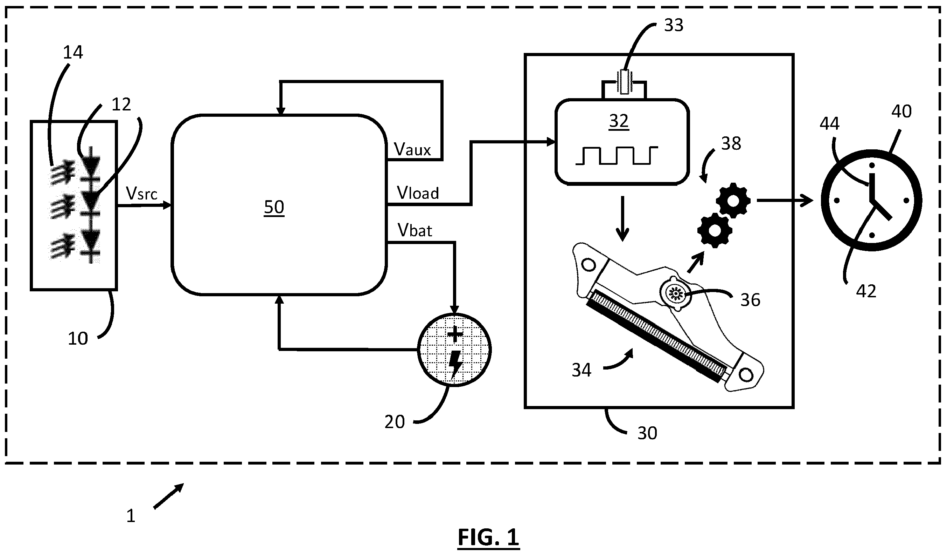

Figure 1 is block system diagram of a solar-powered device 1 in accordance with an embodiment of the present invention. The device 1 comprises an array 10 of one or more solar (or photovoltaic) cells 12 that convert ambient light 14 into electrical energy. In this example, device 1 is an electronic timepiece having an energy storage device that stores electrical energy that has been harvested from the solar array 10. As shown in figure 1, energy storage device is preferably a rechargeable secondary battery 20, but other types of storage devices such as a supercapacitor may also be used. The energy from the secondary battery 20 and/or the energy harvested directly from the solar array 10 can be used to power a load to enable operation of the device. In the illustrated example, the load is an electronic quartz movement 30 comprising a timing circuit 32 that is tuned to a quartz crystal oscillator 33 to drive a stepping motor 34. In the case of an analogue display watch, the rotor 36 of the stepping motor commands a gear train 38 to drive the hour and minute hands 42, 44 around a watch dial 40 of the timepiece. The solar cells 12 may be located on or within the timepiece device 1 at any suitable position, such as around the perimeter of dial 40 or underneath dial 40 where the latter is at least partly transmissible to light.

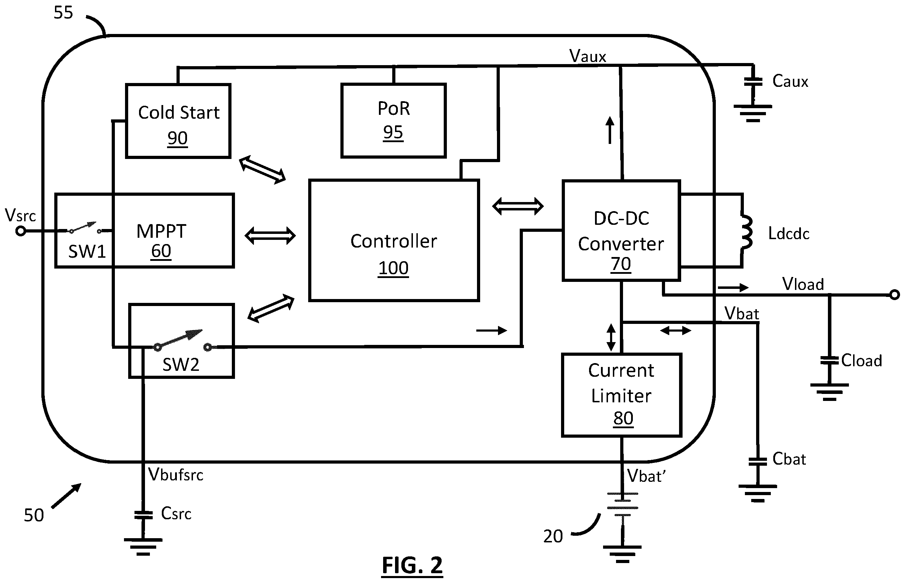

Solar-powered device 1 further includes a power management system 50 that comprises circuitry having an input for receiving a solar source voltage Vsrc output by the solar array 10. System 50 generates a load voltage Vload to drive the load 30 on a first output and a storage or battery voltage Vbat to charge the battery 20 on a second output. As shown, on a third output, the power management system 50 also generates an internal supply voltage Vaux that is used to power the circuitry of the power management system 50 itself. As shown in figure 2 and described further below, the voltage Vbat is also available as an input to regulate the output voltages Vload and Vaux when the solar source voltage Vsrc is not available or not used to harvest energy for the system 50.

As will be appreciated, secondary battery 20, the electrical components of movement 30 including timing circuit 32 and oscillator 33, the electrical components of system 50, and their various electrical connections may all be conveniently mounted on a common circuit board or support module within the device 1.

Referring to figure 2, a more detailed block circuit diagram of the power management system 50 is shown in accordance with a preferred embodiment. As indicated in figure 2, power management circuit system 50 may be implemented in part as an integrated circuit 55, which may be an application-specific integrated circuit (ASIC). Alternatively, system 50 may be implemented as a combination of discrete electronic components including for example a programmable logic device. As shown, system 50 comprises: a solar charge controller circuit which is preferably a maximum power point tracking (MPPT) circuit 60 with a switch SW1; a DC-DC voltage converter regulator circuit 70 and a switch SW2; a current limiter circuit 80; a cold start circuit 90; and a power-on-reset (PoR) circuit 95. The power management circuit further comprises a main controller circuit 100, which may be a synchronous digital circuit implemented as a programmable IP logic core of an integrated circuit. The controller 100 can be programmed to configure the power management system 50 to implement a power management strategy as described below, in which the solar source voltage Vsrc and other system voltages are measured to place the system 50 into different operating modes.

Since the voltage and current output by solar array 10 can vary significantly when environmental conditions such as irradiation and temperature change, the MPPT circuit 60 is preferably used to increase the power extraction efficiency of the solar array 10. The MPPT circuit is designed to continually monitor the solar source voltage Vsrc to track the voltage and current that result in a maximum power point. Here, "continual monitoring" means either essentially continuous monitoring or monitoring at a frequent rate so that the source voltage can also potentially be harvested by the power management system 50 without interruption, although the actual monitoring rate will depend on the circuitry used. The MPPT circuit can sample Vsrc and change the impedance seen by the array 10, in particular by varying the duty cycle (continuous operation) or by varying the switching frequency (discontinuous operation) of the DC-DC converter regulator 70 in order to maximise the harvesting of solar power, with the MPPT harvesting energy whenever Vsrc is at or above a predetermined target level. The operation and implementation of possible MPPT circuits is described in more detail in Eltawil et al., "MPPT techniques for photovoltaic applications", Renewable and Sustainable Energy Reviews, Volume 25, September 2013, Pages 793-813. Different MPPT techniques can be employed, but in a preferred embodiment MPPT circuit 60 uses a Fractional Open Circuit Voltage (FOCV) technique to sample the Vsrc voltage. To estimate the MPP voltage using the FOCV method, the solar array 10 is momentarily disconnected at SW1 from the rest of the power management circuit 50, and the open circuit voltage Vsrc is measured (i.e., sampled) and multiplied by a voltage factor, which may for example range between 0.6 - 0.9 depending on the type of solar-powered cells 12 and the particular device application. The measured open-circuit voltage for the solar array typically allows an accurate estimation of the voltage to be used for MPPT optimisation, since the voltage factor remains relatively constant despite changing irradiance and temperature. Depending on the application, the sampling of the open circuit voltage Vsrc by the MPPT circuit 60 may occur at different rates, for instance from once every few milliseconds to once every few minutes. In the case of a solar-powered timepiece, the sampling may for instance occur once every 1-10 seconds, with a sampling pulse duration of, for example, 10-200 milliseconds. However, the sampling may also occur more or less frequently, especially for other types of solar-powered devices. In general, the DC-DC converter regulator 70 cannot use Vsrc as an input during the MPPT sampling.

In other embodiments using different sampling techniques, the MPPT circuit 60 may be connected directly to Vsrc, i.e., without switch SW1, although this typically requires a longer sampling time to evaluate Vsrc. In addition, while the use of an MPPT circuit 60 in power management system 50 is preferred, another type of solar charge controller such as a pulse width modulation (PWM) solar charge controller could alternatively be used. In these cases, it will be appreciated that the Vsrc voltage may be sampled in a closed state and sampling may also occur in a more frequent or continual manner.

The DC-DC converter regulator 70 is preferably a multiple-input and multiple-output (MIMO) buck-boost converter regulator. The MIMO buck-boost converter regulator may for example be implemented as described in G. Chen, Y. Liu, X. Qing, M. Ma and Z. Lin, "Principle and Topology Derivation of Single-Inductor Multi-Input Multi-Output DC-DC Converters," in IEEE Transactions on Industrial Electronics, vol. 68, no. 1, pp. 25-36, Jan. 2021. The converter regulator 70 has a first input for receiving Vsrc, with a decoupling capacitor Csrc acting as an energy buffer to prevent large voltage fluctuations at this input when the converter is switching via SW2. The converter regulator 70 has three outputs - Vaux, Vload, and Vbat - with each having a respective capacitor - Caux, Cload, and Cbat - acting as an energy buffer for the respective voltage signal. The capacitor Cload also serves to reduce the propagation of any voltage ripple induced by the current pulses that arise due to the switching of the converter regulator 70. In known manner, when switch SW2 is closed, Vsrc is directly connected to the inductor Ldcdc, and when switch SW2 is open, the inductor Ldcdc is connected to one of the outputs and its decoupling capacitor. Since the three output rails share a single inductor Ldcdc, the size of power management system 50 can be reduced. The values of the capacitors are also preferably as small as possible, for example of the order of 0.1-50 µF, to further reduce the overall circuit footprint. As part of the power management system and strategy, Vbat, decoupled via the capacitor Cbat, may also act as a second input to the DC-DC converter regulator 70 to regulate the Vaux and Vload outputs notably when energy from the solar array 10 is not available or not harvested, as described further below.

To prolong the battery lifetime, the charging current provided by the DC-DC converter regulator 70 is limited by a current limiter switch 80 before being provided at node Vbat' to secondary battery 20. The current limiter 80 can be pre-configured to determine appropriate battery voltages protection thresholds to avoid any overcharge or discharge depending on the particular characteristics of battery 20.

The nominal value and ranges of voltages Vaux, Vload, and Vbat that are regulated by the DC-DC converter regulator 70 will vary depending on the details of the power management circuitry, the load, and the secondary battery. In the case of a solar powered timepiece device, the voltage ranges may for example be from 2 V to 2.5 V for Vaux, from 1.2 V to 1.8 V for Vload, and 1 V to 3 V for Vbat. In an active operating mode, the nominal values for Vaux, Vload and Vbat will, after an initial start-up phase, generally lie near the middle of those ranges.

Initially, the cold start circuit 90 operates to enable the DC-DC converter regulator 70 to quickly start harvesting energy from solar array 10 even when the available source voltage Vsrc and input power from the solar array 10 are still relatively low. For instance, the cold start circuit 90 may begin to operate effectively once Vsrc reaches 300 mV with an input power of 3µW. As described further below, circuit 90 allows system 50 to start-up without using energy from the secondary battery 20 once the system can start harvesting small amounts of energy from the solar array 10. This helps avoid battery drain, particularly when the device 1 is in darkness for a prolonged period of time. In addition, as will also be appreciated, the power-on-reset circuit 95 helps to provide a steady, regulated value of Vaux to the power management circuit 55 soon after an initial application of power.

When the power management system 50 operates in an active supply (A) mode, the controller 100 configures the system to monitor the solar source voltage Vsrc in a continual manner and to harvest that energy, preferably in accordance with the MPPT strategy, to regulate one or more of the output voltages of system 50. The continual monitoring rate of Vsrc in the active supply (A) mode may be asynchronous and depend on the specific circuitry used, but in a typical application it may occur on the order of once every 1-100 microseconds for example. As will be appreciated, this active monitoring and harvesting of Vsrc by power management system 50 comes at the cost of higher power consumption, but as long as sufficient energy is available on the solar cell array 10, the overall power balance for system 50 remains positive.

In general, in the active supply (A) mode, the converter regulator 70 of system 50 transfers energy directly from Vsrc to Vload, maintaining Vload near a desired nominal value, optionally with a small hysteresis. Any excess power extracted by the converter regulator can be used to charge the battery 20. On the other hand, if a current peak arises on Vload that cannot be handled with power from Vsrc alone, the missing energy is supplied by the battery 20 via the second input to the converter regulator 70.

In accordance with the present invention, to render the overall harvesting of energy from the solar cell array 10 more efficient while the load 30 is powered and the device 1 operating, the power management system 50 is configured to place itself into one or more low-power modes in response to the voltage Vsrc detected at the output of the solar cell array 10. When the sampled voltage Vsrc is above a first threshold voltage Vth1, the power management system 50 operates in the active supply (A) mode in which the source is continually monitored and energy can be harvested from the solar cells and used to regulate the outputs of system 50 as described above. However, when the voltage Vsrc falls below the first threshold voltage Vth1, the power management system 50 enters a low-power mode in which the harvesting of energy from the solar array 10 does not occur, occurs only when one or more conditions are met, or occurs at a reduced rate. In a low-power mode, the load 30 is still powered and the device 1 continues to operate, however the system 50 generally stops operating the DC-DC converter regulator 70 to conserve power, the controller 100 and converter regulator 70 only waking up occasionally (as described below) when necessary to regulate Vload and Vaux...

Advantageously, when the system 50 is not monitoring the solar source voltage Vsrc in a low-power mode, the quiescent current through the Vaux node is significantly reduced, for example by approximately ten times, thereby considerably decreasing the system's energy consumption. Furthermore, in comparison to the active supply (A) mode, the controller 100 may operate at a lower clock frequency when the system 50 is in a low-power mode to further conserve energy.

In a preferred embodiment, the power management controller may enter at least two different low-power modes: a light sleep (LS) mode entered when the voltage Vsrc is below the first threshold voltage Vth1 but above a second threshold voltage Vth2; and a deep sleep (DS) mode entered when the voltage Vsrc falls below the second threshold voltage Vth2.

The second threshold voltage Vth2 is selected such that, when Vsrc is below that threshold, there is effectively no harvestable energy on the solar array 10. This may be the case notably when the device 1 is in the dark. As a result, in the deep sleep (DS) mode, the controller 100 stops all attempts to monitor the source voltage Vsrc and to harvest energy from the solar cells, and therefore only the voltage Vbat is available as an energy source. In this mode, the Vload and Vaux voltages are regularly monitored by the controller 100, and if one or both of these voltages drops below its target value, the power management system can briefly wake-up the converter regulator 70 to supply those outputs from the battery 20. A small hysteresis may be used to avoid waking up the system 50 too often. In addition, the battery voltage is also monitored so that if Vbat falls below a discharge threshold voltage, then the power management system 50 preferably enters a shutdown (SD) mode as described further below.

In the light sleep (LS) mode, the controller 100 periodically and/or in response to one or more system conditions monitors Vsrc so that the system 50 can temporarily harvest energy from the solar cells to supply the system when it is available. The system conditions that may trigger the monitoring of Vsrc and the potential harvesting of energy in a light sleep mode may for example include the value of Vaux or Vload falling below a predetermined level.

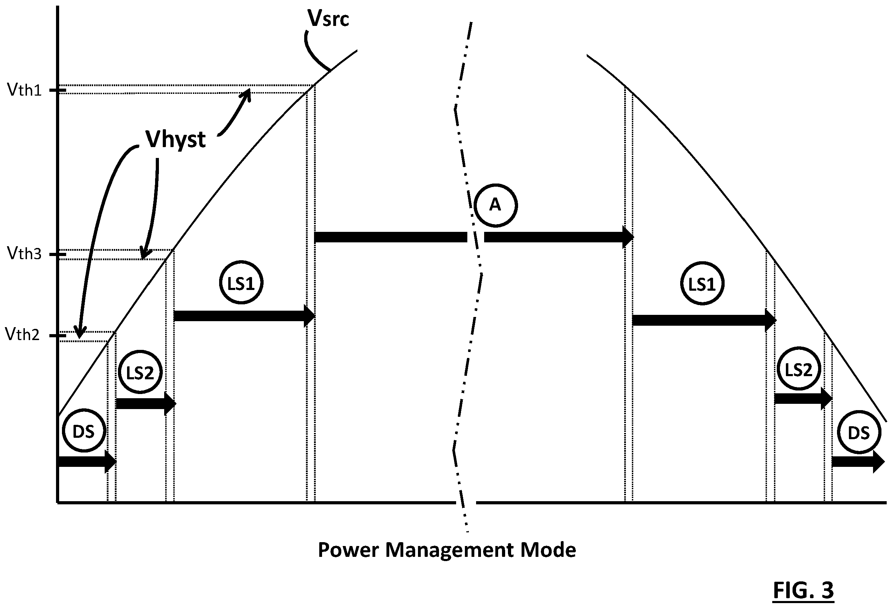

In one embodiment, system 50 is configured to operate in a first light sleep (LS1) mode and a second light sleep (LS2) mode, as illustrated in Figure 3.

The first light sleep (LS1) mode is entered when the voltage Vsrc is below the first threshold voltage Vth1 but above a third threshold voltage Vth3 that is between the first threshold voltage Vth1 and the second threshold voltage Vth2, i.e., Vth1 > Vth3 > Vth2. This may be the case when the device 1 is in an environment with dim lighting. In this mode, some energy is generally available to be harvested on the solar cell array, and the controller 100 configures the system to periodically wake-up and monitor Vsrc in order to be able to briefly harvest energy from the solar cells and supply the system. This harvested energy may be used, in particular, to charge the battery 20. In comparison to the active supply (A) mode, the monitoring rate in such a light sleep mode is significantly lower. For example, monitoring may occur only every 1-100 milliseconds, which may be of the order of one thousand times less frequent than the continual monitoring in the active supply (A) mode. The monitoring rate may remain the same in the first light sleep (LS1) mode or it may vary depending on one or more system conditions. In general, although the periodic waking-up of the power management system 50 in this mode consumes some energy, the net power balance generally remains positive due to the extra amount of energy harvested from the solar cell array.

The second light sleep (LS2) mode is entered when the voltage Vsrc is below the third threshold voltage Vth3 but above the second threshold voltage Vth2. This may be the case when the device 1 is in an environment with only very faint lighting. In the LS2 mode, there is generally only a small amount of harvestable energy on the output of the solar cell array 10, and so the controller 100 configures system 50 to temporarily wake-up only in response to the occurrence of one or more system conditions. These conditions may notably occur when the value of Vaux or Vload falls below a predetermined level. When these conditions arise in the second light sleep (LS2) mode, the system 50 briefly monitors the source voltage Vsrc and is able to temporarily harvest energy from the solar cell array 10 in order to transfer any needed energy to Vaux or Vload prior to going back to sleep.

The power management system 50 may be operable in any combination of one or more low-power modes. For example, system 50 could be operable in only one of the above-described low-power modes. Similarly, system 50 could be operable in the first light sleep (LS1) mode and the second light sleep (LS2) mode without a deep sleep (DS) mode, or system 50 could be operable in the deep sleep mode and only one of the first or second light sleep modes.

In a preferred embodiment, the Vsrc voltage measured to determine the power management mode of system 50 is the open circuit Vsrc voltage sampled by the MPPT circuit 60. In this manner, the power management system mode can potentially change after every MPPT sampling, which as noted above may occur once every 1-10 seconds in the case of a solar-powered timepiece. However, in other embodiments, a closed circuit Vsrc measurement may be used, especially where the MPPT circuit does not use the FOCV method or where system 50 does not comprise an MPPT module. In this case, the sampling or measurement of Vsrc may be more frequent or even continual, and the necessary Vsrc voltage levels may be assessed using an analog-to-digital converter or voltage comparators.

Figure 3 shows how power management system 50 changes modes as the solar source voltage Vsrc increases and decreases. The Vsrc curve shown is used for sake of illustration only and is not representative of the actual behaviour of the output of the solar array 10, which may change abruptly in response to the ambient conditions. In the example of Figure 3, the deep sleep (DS), second light sleep (LS2), first light sleep (LS1) and active supply (A) modes are shown along with the voltages Vth1, Vth2, and Vth3. In general, the threshold values of Vth1, Vth2 and Vth3 will depend on the type of solar-powered device 1 and the nature of its components especially the characteristics of the solar array 10 and its solar cells 12.

As shown in Figure 3, to desensitize mode transitions from noise and avoid repeated fluctuations, a hysteresis voltage band Vhyst may be introduced around each voltage threshold Vth1, Vth2, and Vth3. This is particularly advantageous when the measurement of Vsrc is more frequent or continual, as may be the case when the power management system 50 does not comprise an MPPT module. As will be appreciated, a hysteresis band may for example be achieved by using comparators with a higher trip point for rising Vsrc and a lower trip point for falling Vsrc.

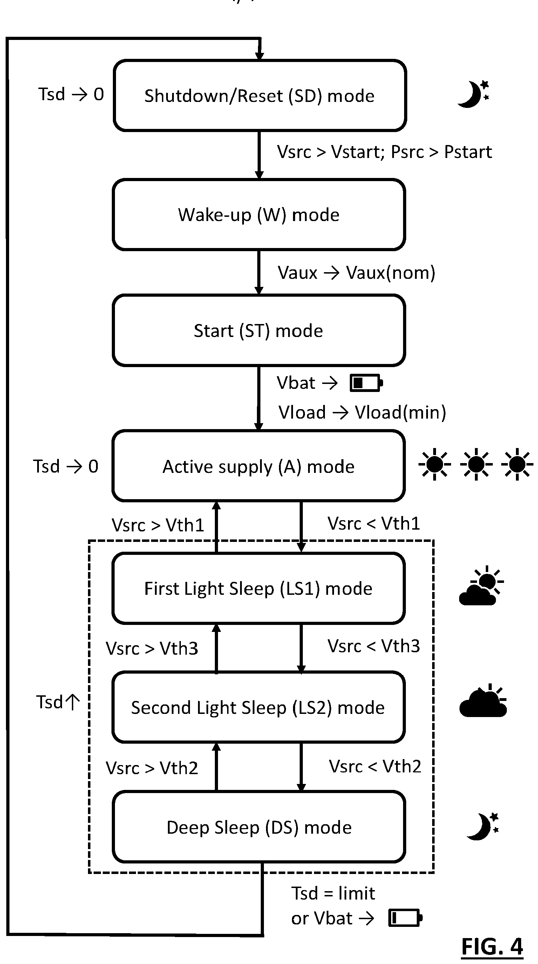

Figure 4 is a flow control diagram illustrating a power management method in accordance with which system 50 of solar-powered device 1 may operate when transitioning between different operating modes, including the modes shown in Figure 3. The threshold voltages mentioned by way of example below are for a solar-powered timepiece device with an electronic quartz movement and an analogue display, as shown in Figure 1. Referring to figure 4, the device 1 is initially in a shutdown/reset (SD) mode in which all circuit nodes are deeply discharged and there is no available energy to be harvested. This may notably occur when the device has been stored in the dark for a significant time.

When the solar cell array 10 is again exposed to light, a wake-up (W) mode is activated as soon as a required cold-start voltage Vstart (for example 300 mV) and a minimum amount of power Pstart (for example 3 µW) become available on Vsrc. The system remains in this mode until the internal supply voltage Vaux reaches its nominal value, for example 2.2 V. Once this occurs, the power management system 50 switches to a start (ST) mode, in which the system uses the energy harvested from Vsrc 50 to regulate the load voltage Vload and charges the battery 20. When Vbat is sufficiently charged so that it is comfortably above a minimum discharge voltage threshold and Vload rises to a minimum operating level for reliably operating the load 30, the system 50 switches from the start (ST) mode to the active supply (A) mode. Under daylight conditions, the transition from shutdown/reset mode to active supply mode can typically occur relatively quickly, for example under one second, although the transition time will be influenced by various factors including the type of solar cells 12 used.

In the active supply (A) mode, the Vsrc voltage will vary, for example from 400 mV to 4.5 V, depending on the ambient conditions. As already described above, in accordance with the present invention, the power management system 50 will enter a low-power mode when Vsrc drops below Vth1. In the example of figure 4, the system enters a low-power mode and more particularly the first light sleep (LS1) mode when Vsrc is below a first threshold voltage Vth1 that may for example equal 400 mV. In a similar manner, the second threshold voltage Vth2 and the third threshold voltage Vth3 that act as upper limits for the deep sleep (DS) mode and the second light sleep (LS2) mode may for example equal 150 mV and 250 mV respectively.

As indicated in Figure 4, during operation under weak lighting conditions, the system 50 may move between the active and low-power modes repeatedly, and the transition from one mode to the other is not necessarily sequential. For instance, the system can move directly from the light sleep 2 (LS2) mode to the active supply (A) mode. As noted above, whenever the system 50 operates in the active supply mode or in any of the low-power modes, the system continues to regulate Vload when necessary in order to power the load so that the device 1 continues to operate.

While the system 50 operates in a low-power mode, a shutdown time counter Tsd runs. Every time the system 50 returns to the active supply (A) mode, the counter Tsd is reset to zero. If the controller 100 detects that the power management system 50 has not entered the active supply (A) mode after the counter Tsd reaches a set time limit (for example, after 4 weeks), the power management system 50 assumes that the device has been placed into long-term storage, and the system enters the shutdown/reset (SD) mode.

The power management system 50 also enters the shutdown/reset (SD) mode when Vbat falls below the minimum discharge voltage threshold, which may for example be about 1 V. In this case, the transition to the shutdown/reset (SD) mode may only happen after a delay of at least 500 milliseconds to avoid a false discharged battery detection as might occur during a current peak.

In either case, upon entry into the shutdown/reset (SD) mode, the power management system 50 stops supplying the Vload and Vaux voltages and resets shutdown time counter Tsd to zero. The device 1 therefore ceases to operate. The system 50 further disconnects the connection to the battery 20 to prevent any deep discharge that could potentially damage the battery.

The above-described power management system and method may also be combined with a low-power load operation mode. For example, in the case again of a solar-powered timepiece, if the system 50 remains in a low-power mode for more than a few days, the timing circuit 32 of the load 30 may be powered but the stepper motor 34 for the analogue display (or alternatively an electronic display) may not be powered. In this case, the timepiece load also consumes considerably less energy from the battery 20 in a low-power device mode. A sleep counter can track the time during which the timepiece remains in the low-power load operation mode, and when the power management system 50 next returns to the active supply (A) mode, the system can automatically reset the watch hands (or the electronic display) to display the correct time.

The power management system and method for a solar-powered device according to the present invention are especially suitable for low-current applications where the load must operate continuously or quasi-continuously, such as a timepiece with an electronic quartz movement. However, the system and method may also be employed with other types of devices, for example a wearable device such as a fitness tracker. More generally, while the invention has been described in conjunction with specific embodiments, it is evident that numerous alternatives, modifications, and variations will be apparent to those skilled in the art in light of the foregoing description.

## Claims

1. A solar-powered device (1) comprising:
an array (10) of one or more solar cells (12) for converting ambient light into a solar source voltage (Vsrc);
an energy storage device, such as a secondary battery (20);
a load (30) that is powered when the device (1) operates; and
a power management system (50) for receiving and monitoring the solar source voltage (Vsrc) to harvest energy therefrom, the power management system (50) generating a load voltage (Vload) to power the load (30) and a storage voltage (Vbat) to charge the energy storage device (20);
wherein while the device (1) operates and when the solar source voltage (Vsrc) is above a first threshold voltage (Vth1), the power management system (50) is configured to operate in an active supply (A) mode in which the system (50) continually monitors the solar source voltage (Vsrc) ; and
wherein, while the device (1) operates and when the solar source voltage (Vsrc) is below the first threshold voltage (Vth1), the power management system (50) is configured to operate in at least one low-power (LS1, LS2, DS) mode in which the system (50) does not monitor the solar source voltage (Vsrc), only monitors the solar source voltage (Vsrc) when one or more conditions are met, or monitors the solar source voltage (Vsrc) at a reduced rate in comparison to the continual monitoring in the active supply mode.

2. The device (1) of the preceding claim, wherein:
while the device (1) operates and when the solar source voltage (Vsrc) is below the first threshold voltage (Vth1) and above a second threshold voltage (Vth2) that is lower than the first threshold voltage (Vth1), the power management system (50) is configured to operate in a light sleep (LS1, LS2) low-power mode in which the system (50) only monitors the solar source voltage (Vsrc) when one or more conditions are met or monitors the solar source voltage (Vsrc) at a reduced rate in comparison to the continual monitoring in the active supply mode; and
while the device (1) operates and when the solar source voltage (Vsrc) is below the second threshold voltage (Vth2), the power management system (50) is configured to operate in a deep sleep (DS) low-power mode in which the system (50) does not monitor the solar source voltage (Vsrc).

3. The device (1) of the preceding claim, wherein:
while the device (1) operates and when the solar source voltage (Vsrc) is below the first threshold voltage (Vth1) and above a third threshold voltage (Vth3) that is between the first threshold voltage (Vth1) and the second threshold voltage (Vth2), the power management system (50) is configured to operate in a first light sleep (LS1) low-power mode in which the system (50) monitors the solar source voltage (Vsrc) at a reduced rate in comparison to the continual monitoring in the active supply mode; and
while the device (1) operates and when the solar source voltage (Vsrc) is below the third threshold voltage (Vth3) and above the second threshold voltage (Vth2), the power management system (50) is configured to operate in a second light sleep (LS2) low-power mode in which the system (50) only monitors the solar source voltage (Vsrc) when one or more conditions are met.

4. The device (1) of one of the preceding claims, wherein the one or more conditions are met when a voltage (Vaux, Vload) generated by the power management system (50) falls below a predetermined level.

5. The device (1) of one of the preceding claims, wherein the power management system (50) also generates an internal supply voltage (Vaux) to power the power management system (50) itself.

6. The device (1) of one of the preceding claims, wherein the power management system (50) comprises a DC-DC voltage converter regulator (70, SW2) having a first input for receiving the solar source voltage (Vsrc), a first output for generating the internal supply voltage (Vaux), a second output for generating the load voltage (Vload), and a third output for generating the storage voltage (Vbat), and wherein the DC-DC voltage converter regulator (70, SW2) preferably comprises only a single inductor (Ldcdc).

7. The device (1) of the preceding claim, wherein the DC-DC voltage converter regulator (70, SW2) further comprises a second input for receiving the storage voltage (Vbat).

8. The device (1) of one of the preceding claims, wherein the power management system (50) comprises a maximum power point tracking circuit (60) for monitoring the solar source voltage (Vsrc) and tracking the maximum power point at which to harvest energy from the solar source voltage (Vsrc).

9. The device (1) of the preceding claim, wherein the maximum power point tracking circuit (60) uses a fractional open circuit voltage technique to sample the solar source voltage (Vsrc) in which the solar array (10) is momentarily disconnected from the rest of the power management system (50) and the open circuit solar source voltage (Vsrc) is measured.

10. The device (1) of one of the preceding claims, wherein a measurement of the open circuit solar source voltage (Vsrc) is used to determine the mode of operation of power management system (50) while the device (1) operates.

11. The device (1) of one of the preceding claims, wherein the power management system (50) comprises a controller (100) for configuring the mode of operation of the power management system (50).

12. The device (1) of one of the preceding claims, wherein at least part of the power management system (50) is implemented as an integrated circuit (55), preferably as an application specific integrated circuit with a programmable IP logic core.

13. The device (1) of one of the preceding claims, wherein the device is a solar-powered timepiece and the load (30) is an electronic quartz movement comprising a timing circuit (32) and a stepper motor (34).

14. A power management method for a solar-powered device (1) comprising an array (10) of one or more solar cells (12) for converting ambient light into a solar source voltage (Vsrc), an energy storage device such as a secondary battery (20), and a load (30) that is powered when the device (1) operates, the method comprising:
receiving the solar source voltage (Vsrc);
monitoring the solar source voltage (Vsrc) to harvest energy therefrom in accordance with a plurality of operating modes including
while the device (1) operates and when the solar source voltage (Vsrc) is above a first threshold voltage (Vth1), operating in an active supply (A) mode in which the solar source voltage (Vsrc) is continually monitored, and
while the device (1) operates and when the solar source voltage (Vsrc) is below the first threshold voltage (Vth1), operating in at least one low-power (LS1, LS2, DS) mode in which the solar source voltage (Vsrc) is not monitored, the solar source voltage (Vsrc) is only monitored when one or more conditions are met, or the solar source voltage (Vsrc) is monitored at a reduced rate in comparison to the continual monitoring in the active supply (A) mode; and
generating a load voltage (Vload) to power the load (30) and a storage voltage (Vbat) to charge the energy storage device (20).

15. The method of the preceding claim, wherein monitoring the solar source voltage (Vsrc) to harvest energy therefrom in accordance with a plurality of operating modes further comprises:
while the device (1) operates and when the solar source voltage (Vsrc) is below the first threshold voltage (Vth1) and above a second threshold voltage (Vth2) that is lower than the first threshold voltage (Vth1), operating in a light sleep (LS1, LS2) low-power mode in which the solar source voltage (Vsrc) is only monitored when one or more conditions are met or the solar source voltage (Vsrc) is monitored at a reduced rate in comparison to the continual monitoring in the active supply (A) mode; and
while the device (1) operates and when the solar source voltage (Vsrc) is below the second threshold voltage (Vth2), operating in a deep sleep (DS) low-power mode in which the solar source voltage (Vsrc) is not monitored.
